(19) Europäisches Patentamt

European Patent Office

Office européen des brevets

(11) **EP 3 619 652 B1**

(12) **EUROPEAN PATENT SPECIFICATION**

(45) Date of publication and mention
of the grant of the patent:
**24.11.2021 Bulletin 2021/47**

(51) Int Cl.:
**G06N 3/063** (2006.01)          **G06N 3/08** (2006.01)
**G06N 3/04** (2006.01)

(21) Application number: **18845593.5**

(22) Date of filing: **07.06.2018**

(86) International application number:
**PCT/CN2018/090300**

(87) International publication number:
**WO 2019/033836 (21.02.2019 Gazette 2019/08)**

(54) **ADAPTIVE BIT-WIDTH REDUCTION FOR NEURAL NETWORKS**

ADAPTIVE BITBREITENREDUKTION FÜR NEURONALE NETZE

RÉDUCTION ADAPTATIVE DE LARGEUR DE BIT POUR RÉSEAUX NEURONAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.08.2017   US 201715676701**

(43) Date of publication of application:
**11.03.2020   Bulletin 2020/11**

(73) Proprietor: **Midea Group Co., Ltd.
Foshan,  Guangdong 528311 (CN)**

(72) Inventors:
• **WANG, Aosen
  San Jose, California 95134 (US)**
• **ZHOU, Hua
  San Jose, California 95134 (US)**
• **CHEN, Xin
  San Jose, California 95134 (US)**

(74) Representative: **Lam, Alvin et al
Maucher Jenkins
26 Caxton Street
London SW1H 0RJ (GB)**

(56) References cited:
WO-A1-2004/042594     US-A1- 2012 259 437
US-A1- 2016 086 078     US-A1- 2016 086 078
US-A1- 2016 328 647     US-A1- 2017 103 298

• CHEN XI ET AL: "FxpNet: Training a deep convolutional neural network in fixed-point representation", 2017 INTERNATIONAL JOINT CONFERENCE ON NEURAL NETWORKS (IJCNN), IEEE, 14 May 2017 (2017-05-14), pages 2494-2501, XP033112353, DOI: 10.1109/IJCNN.2017.7966159 [retrieved on 2017-06-30]
• PARK EUNHYEOK ET AL: "Weighted-Entropy-Based Quantization for Deep Neural Networks", IEEE COMPUTER SOCIETY CONFERENCE ON COMPUTER VISION AND PATTERN RECOGNITION. PROCEEDINGS, IEEE COMPUTER SOCIETY, US, 21 July 2017 (2017-07-21), pages 7197-7205, XP033250087, ISSN: 1063-6919, DOI: 10.1109/CVPR.2017.761 [retrieved on 2017-11-06]
• KO JONG HWAN ET AL: "Adaptive weight compression for memory-efficient neural networks", DESIGN, AUTOMATION & TEST IN EUROPE CONFERENCE & EXHIBITION (DATE), 2017, EDAA, 27 March 2017 (2017-03-27), pages 199-204, XP033096348, DOI: 10.23919/DATE.2017.7926982 [retrieved on 2017-05-11]
• Aosen Wang ET AL: "Deep Neural Network Capacity", , 16 August 2017 (2017-08-16), pages 1-7, XP055706789, Retrieved from the Internet: URL:https://arxiv.org/pdf/1708.05029v1.pdf [retrieved on 2020-06-19]

EP 3 619 652 B1

**Description**

**TECHNICAL FIELD**

This disclosure relates to machine learning real-time applications, and more specifically, to improving machine learning models for portable devices and real-time applications by reducing model size and computational footprint of the machine learning models and keeping same accuracy.

**BACKGROUND**

Machine learning has wide applicability in a variety of domains, including computer vision, speech recognition, machine translation, social network filtering, playing board and video games, medical diagnosis, and many other domains. A machine learning model, such as an artificial neural network (ANN), is a network of simple units (neurons) which receive input, change their internal states (activation) according to that input, and produce output depending on the input and the activation. The network is formed by connecting the output of certain neurons to the input of other neurons through a directed, weighted graph. The weights as well as the functions that compute the activations are gradually modified by an iterative learning process according to a predefined learning rule until predefined convergence is achieved. There are many variants of machine learning models and different learning paradigms. A convolutional neural network (CNN) is a class of feed-forward networks, composed of one or more convolutional layers with fully connected layers (corresponding to those of an ANN). A CNN has tied weights and pooling layers and can be trained with standard backward propagation. Deep learning models, such as VGG16 and different types of ResNet, are large models containing more than one hidden layer that can produce analysis results comparable to human experts, which make them attractive candidates for many real-world applications.

Neural network models typically have a few thousand to a few million units and millions of parameters. Deeper and high-accuracy CNNs require considerable computing resources, making them less practical for real-time applications or deployment on portable devices with limited battery life, memory, and processing power. The existing state-of-the-art solutions for deploying large neural network models (e.g., deep learning models) for various applications focus on two approaches, model reduction and hardware upgrades. Model reduction that focuses on reducing the complexity of the model structure often compromises the model's accuracy drastically, while hardware upgrades are limited by practical cost and energy consumption concerns. Therefore, improved techniques for producing effective, lightweight machine learning models are needed.

Journal article "FxpNet: Training a deep convolutional neural network in fixed-point representation" by Chen X. et. al.published in: 2017 International Joint Conference on Neural Networks discloses a framework to train deep convolutional neural networks with low bit-width arithmetics in both the forward pass and backward pass. US 2016/086078 A1 discloses a client device configured with a neural network includes a processor, a memory, a user interface, a communications interface, a power supply and an input device, wherein the memory includes a trained neural network received from a server system that has trained and configured the neural network for the client device. Journal article " Weighted-Entropy-based Quantization for Deep Neural Networks" by Park. et. al. published in: 2017 Conference on Computer Vision and Pattern Recognition discloses quantization methods to optimize the inference cost of neural network models for their deployment to mobile and embedded systems, which have tight resource constraints. US 2016/328647 A1 discloses a computer-implemented method of providing an adaptive bit-width neural network model on a computing device.

**SUMMARY**

This disclosure describes a technique for producing a high-accuracy, lightweight machine learning model with adaptive bit-widths for the parameters of different layers of the model.

In accordance with the present invention, there is claimed a computer-implemented method as set out in claim 1, a computing device as set out in claim 7, and a computer-readable storage medium as set out in claim 8. Other aspects of the invention can be found in the dependent claims.

The details of one or more implementations described in this specification are set forth in the accompanying drawings and the description below.

**BRIEF DESCRIPTION OF THE DRAWINGS**

Figure 1 illustrates an environment in which an example machine learning system operates in accordance with some embodiments.

Figure 2 is a block diagram of an example model generation system in accordance with some embodiments.

Figure 3 is a block diagram of an example model deployment system in accordance with some embodiments.

Figure 4 is an example machine learning model in accordance with some embodiments.

Figure 5 is a flow diagram of a model reduction process in accordance with some embodiments.

## DETAILED DESCRIPTION

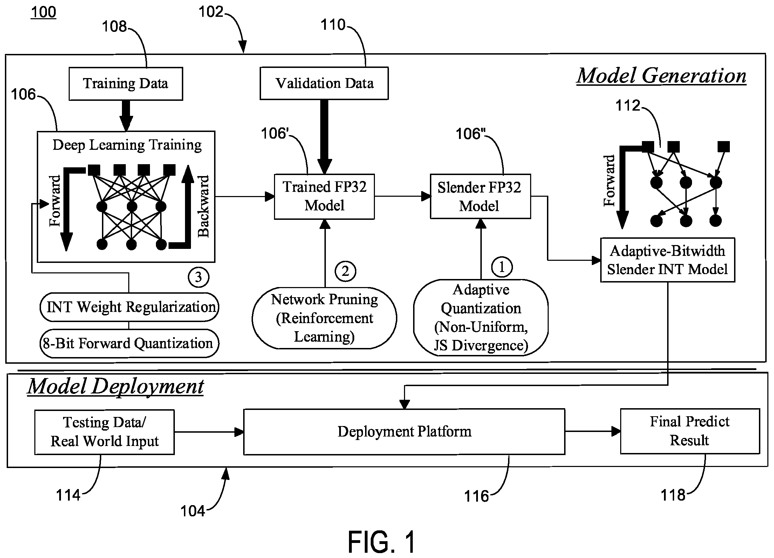

Figure 1 is a block diagram illustrating an example machine learning system 100 in which a model generation system 102 and a model deployment system 104 operate. In some embodiments, the model generation system 102 is a server system with one or more processors and memory that are capable of large-scale computation and data processing tasks. In some embodiments, the model deployment system 104 is a portable electronic device with one or more processors and memory that is lightweight and with limited battery power, and less computation and data processing capabilities as compared to the server system 102. In some embodiments, the model generation system 102 and the model deployment system 104 are remotely connected via a network (e.g., the Internet). In some embodiments, the model deployment system 104 receives a reduced model as generated in accordance with the techniques described herein from the model generation system 102 over the network or through other file or data transmission based on the total number of connections and the network accuracy (e.g., the criterion is based on an indicator value that is the sum of a measure of network accuracy and a reciprocal of total number of connections in the network) is used to determine the best combinations of the connections in terms of a balance between preserving network accuracy and reducing the network complexity.

As shown in Figure 1, once the optional network pruning process is completed, a slender full-precision learning model 106" is generated. The slender full-precision learning model 106" is used as the base model for the subsequent quantization and bit-width reduction process to generate the reduced, adaptive bit-width model 112. In some embodiments, if network pruning is not performed, the trained full-precision model 106' is used as the base model for the subsequent quantization and bit-width reduction process to generate the reduced, adaptive bit-width model 112. The reduced, adaptive bit-width model 112 is the output of the model generation system 102. The reduced, adaptive bit-width model 112 is then provided to the model deployment system 104 for use in processing real-world input in applications. In some embodiments, integer weight regularization and/or 8-bit forward quantization is not applied in the training process of the model 106, and conventional training methods are used to generate the full-precision learning model 106'. If the integer weight regularization and/or 8-bit forward quantization are not performed, the accuracy of the resulting adaptive bit-width model may not be as good, since the parameters are not trained to move toward the integer values and the dynamic range of the values may be too large for large reductions of bit-widths in the final reduced model 112. However, the adaptive bit-width reduction technique as described herein can nonetheless bring about desirable reduction in the model size without intractable amount loss in model accuracy. Thus, in some embodiments, the adaptive bit-width reduction as described herein may be used independent of the integer weight regularization and 8-bit forward quantization during the training stage, even though better results may be obtained if the two techniques are used in combination. More details of how the reduced bit-widths are selected for the different layers or parameters of the model 112 are determined and how the reduced bit-width model 112 is generated from the full-precision base model 106' or 106" in accordance with a predefined non-linear quantization method (e.g., logarithmic quantization) are provided later in this specification.

As shown in Figure 1, once the reduced, adaptive bit-width model 112 is provided to a deployment platform 116 on the model deployment system 104, real-world input data or testing data 114 is fed to the reduced, adaptive bit-width model 112, and final prediction result 118 is generated by the reduced, adaptive bit-width model 112 in response to the input data. For example, if the model 112 is trained for a speech recognition task, the real-world input data may be a segment of speech input (e.g., a waveform or a recording of a speech input), and the output may be text corresponding to the segment of speech input. In another example, if the model 112 is trained for a computer vision task, the real-world input data may be an image or a set of image features, and the output may be an image category that can be used to classify the image. In another example, if the model 112 is trained for content filtering, the real-world input data may be content (e.g., web content or email content), and the output data may be a content category or a content filtering action. A person skilled in the art would be able to input suitable input data into the reduced, adaptive bit-width model 112, in light of the application for which the model 112 was trained, and obtain and utilize the output appropriately. In the interest of brevity, the examples are not exhaustively enumerated herein.

Figure 1 is merely illustrative, and other configurations of an operating environment, workflow, and structure for the machine learning system 100 are possible in accordance with various embodiments.

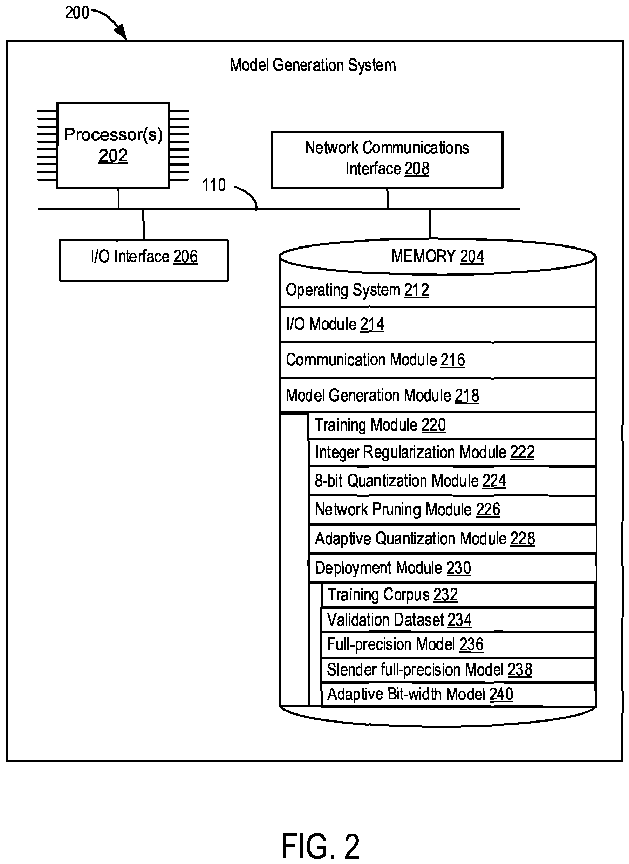

Figure 2 is a block diagram of a model generation system 200 in accordance with some embodiments. The model generation system 200 is optionally used as the model generation system 102 in Figure 1 in accordance with some embodiments. In some embodiments, the model generations system 200 includes one or more processing units (or "processors") 202, memory 204, an input/output (I/O) interface 206, and an optional network communications interface 208. These components communicate with one another over one or more communication buses or signal lines 210. In some embodiments, the memory 204, or the computer readable storage media of memory 204, stores programs, modules, instructions, and data structures including all or a subset of: an operating system 212, an input/output (I/O) module 214, a communication module 216, and a model generation module 218. The one or more processors 202 are coupled to the memory 204 and operable to execute these programs, modules, and instructions, and reads/writes from/to the data structures.

In some embodiments, the processing units 202 include one or more microprocessors, such as a single core or multi-core microprocessor. In some embodiments, the processing units 202 include one or more general purpose processors. In some embodiments, the processing units 202 include one or more special purpose processors. In some embodiments, the processing units 202 include one or more server computers, personal computers, mobile devices, handheld computers, tablet computers, or one of a wide variety of hardware platforms that contain one or more processing units and run on various operating systems.

In some embodiments, the memory 204 includes high-speed random access memory, such as DRAM, SRAM, DDR RAM or other random access solid state memory devices. In some embodiments the memory 204 includes non-volatile memory, such as one or more magnetic disk storage devices, optical disk storage devices, flash memory devices, or other non-volatile solid state storage devices. In some embodiments, the memory 204 includes one or more storage devices remotely located from the processing units 202. The memory 204, or alternately the non-volatile memory device(s) within the memory 204, comprises a computer readable storage medium.

In some embodiments, the I/O interface 206 couples input/output devices, such as displays, a keyboards, touch screens, speakers, and microphones, to the I/O module 214 of the speech recognition system 200. The I/O interface 206, in conjunction with the I/O module 214, receive user inputs (e.g., voice input, keyboard inputs, touch inputs, etc.) and process them accordingly. The I/O interface 206 and the user interface module 214 also present outputs (e.g., sounds, images, text, etc.) to the user according to various program instructions implemented on the model generation system 200.

In some embodiments, the network communications interface 208 includes wired communication port(s) and/or wireless transmission and reception circuitry. The wired communication port(s) receive and send communication signals via one or more wired interfaces, e.g., Ethernet, Universal Serial Bus (USB), FIREWIRE, etc. The wireless circuitry receives and sends RF signals and/or optical signals from/to communications networks and other communications devices. The wireless communications may use any of a plurality of communications standards, protocols and technologies, such as GSM, EDGE, CDMA, TDMA, Bluetooth, Wi-Fi, VoIP, Wi-MAX, or any other suitable communication protocol. The network communications interface 208 enables communication between the model generation system 200 with networks, such as the Internet, an intranet and/or a wireless network, such as a cellular telephone network, a wireless local area network (LAN) and/or a metropolitan area network (MAN), and other devices. The communications module 216 facilitates communications between the model generation system 200 and other devices (e.g., the model deployment system 300) over the network communications interface 208.

In some embodiments, the operating system 202 (*e.g.*, Darwin, RTXC, LINUX, UNIX, OS X, WINDOWS, or an embedded operating system such as VxWorks) includes various software components and/or drivers for controlling and managing general system tasks (*e.g.,* memory management, storage device control, power management, etc.) and facilitates communications between various hardware, firmware, and software components.

In some embodiments, the model generation system 200 is implemented on a standalone computer system. In some embodiments, the model generation system 200 is distributed across multiple computers. In some embodiments, some of the modules and functions of the model generation system 200 are located on a first set of computers and some of the modules and functions of the model generation system 200 are located on a second set of computers distinct from the first set of computers; and the two sets of computers communicate with each other through one or more networks.

It should be noted that the model generation system 200 shown in Figure 2 is only one example of a model generation system, and that the model generation system 200 may have more or fewer components than shown, may combine two or more components, or may have a different configuration or arrangement of the components. The various components shown in Figure 2 may be implemented in hardware, software, firmware, including one or more signal processing and/or application specific integrated circuits, or a combination of thereof.

As shown in Figure 2, the model generation system 200 stores the model generation module 218 in the memory 204. In some embodiments, the model generation module 218 further includes the followings sub-modules, or a subset or superset thereof: a training module 220, an integer weight regularization module 222, an 8-bit forward quantization module 224, a network pruning module 226, an adaptive quantization module 228, and a deployment module 230. In some embodiments, the deployment module 230 optionally performs the functions of a model deployment system, such that the reduced, adaptive bit-width model can be tested with real-world data before actual deployment on a separate model deployment system, such as on a portable electronic device.

In addition, as shown in Figure 2, each of these modules and sub-modules has access to one or more of the following data structures and models, or a subset or superset thereof: a training corpus 232 (e.g., containing training data 108 in Figure 1), a validation dataset 234 (e.g., containing the validation dataset 110 in Figure 1), a full-precision model 236 (e.g., starting as untrained full-precision 106, transforms into a trained full-precision model 106' after training), a slender full-precision model 238 (e.g., pruned model 106" in Figure 1), and a reduced, adaptive bit-width model 240 (e.g., reduced, adaptive bit-width model 112 in Figure 1). More details on the structures, functions, and interactions of the sub-modules and data structures of the model generation system 200 are provided with respect to Figures 1, 4 and 5 and accompanying descriptions.

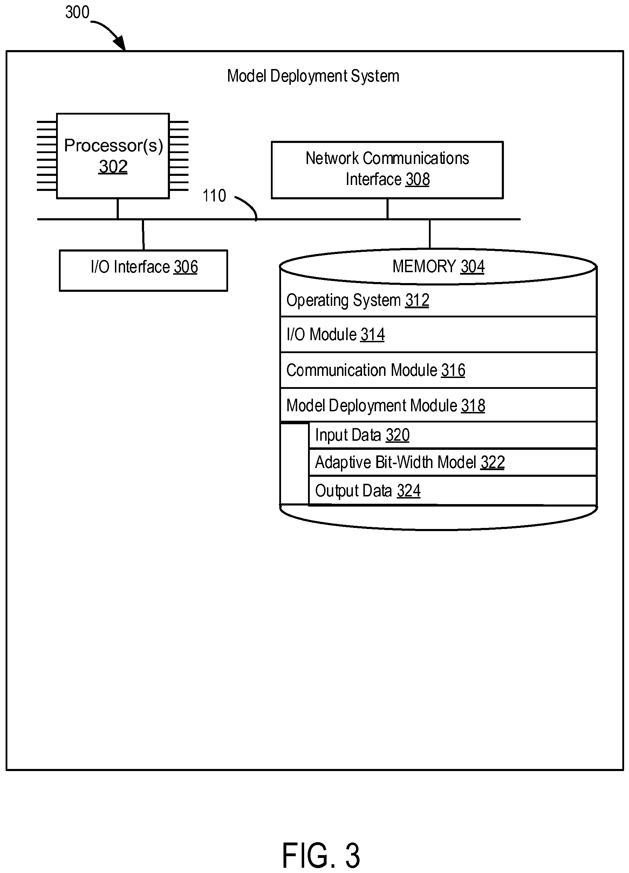

Figure 3 is a block diagram of a model deployment system 300 in accordance with some embodiments. The model deployment system 300 is optionally used as the model deployment system 104 in Figure 1 in accordance with some embodiments. In some embodiments, the model deployment system 300 includes one or more processing units (or "processors") 302, memory 304, an input/output (I/O) interface 306, and an optional network communications interface 308. These components communicate with one another over one or more communication buses or signal lines 310. In some embodiments, the memory 304, or the computer readable storage media of memory 304, stores programs, modules, instructions, and data structures including all or a subset of: an operating system 312, an I/O module 314, a communication module 316, and a model deployment module 318. The one or more processors 302 are coupled to the memory 304 and operable to execute these programs, modules, and instructions, and reads/writes from/to the data structures.

In some embodiments, the processing units 302 include one or more microprocessors, such as a single core or multi-core microprocessor. In some embodiments, the processing units 302 include one or more general purpose processors. In some embodiments, the processing units 302 include one or more special purpose processors. In some embodiments, the processing units 302 include one or more server computers, personal computers, mobile devices, handheld computers, tablet computers, or one of a wide variety of hardware platforms that contain one or more processing units and run on various operating systems.

In some embodiments, the memory 304 includes high-speed random access memory, such as DRAM, SRAM, DDR RAM or other random access solid state memory devices. In some embodiments the memory 304 includes non-volatile memory, such as one or more magnetic disk storage devices, optical disk storage devices, flash memory devices, or other non-volatile solid state storage devices. In some embodiments, the memory 304 includes one or more storage devices remotely located from the processing units 302. The memory 304, or alternately the non-volatile memory device(s) within the memory 304, comprises a computer readable storage medium.

In some embodiments, the I/O interface 306 couples input/output devices, such as displays, a keyboards, touch screens, speakers, and microphones, to the I/O module 314 of the model deployment system 300. The I/O interface 306, in conjunction with the I/O module 314, receive user inputs (e.g., voice input, keyboard inputs, touch inputs, etc.) and process them accordingly. The I/O interface 306 and the user interface module 314 also present outputs (e.g., sounds, images, text, etc.) to the user according to various program instructions implemented on the model deployment system 300.

In some embodiments, the network communications interface 308 includes wired communication port(s) and/or wireless transmission and reception circuitry. The wired communication port(s) receive and send communication signals via one or more wired interfaces, e.g., Ethernet, Universal Serial Bus (USB), FIREWIRE, etc. The wireless circuitry receives and sends RF signals and/or optical signals from/to communications networks and other communications devices. The wireless communications may use any of a plurality of communications standards, protocols and technologies, such as GSM, EDGE, CDMA, TDMA, Bluetooth, Wi-Fi, VoIP, Wi-MAX, or any other suitable communication protocol. The network communications interface 308 enables communication between the model deployment system 300 with networks, such as the Internet, an intranet and/or a wireless network, such as a cellular telephone network, a wireless local area network (LAN) and/or a metropolitan area network (MAN), and other devices. The communications module 316 facilitates communications between the model deployment system 300 and other devices (e.g., the model generation system 200) over the network communications interface 308.

In some embodiments, the operating system 302 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communications between various hardware, firmware, and software components.

In some embodiments, the model deployment system 300 is implemented on a standalone computer system. In some embodiments, the model deployment system 300 is distributed across multiple computers. In some embodiments, some of the modules and functions of the model generation system 300 are located on a first set of computers and some of the modules and functions of the model generation system 300 are located on a second set of computers distinct from the first set of computers; and the two sets of computers communicate with each other through one or more networks. It should be noted that the model deployment system 300 shown in Figure 3 is only one example of a model deployment system, and that the model deployment system 300 may have more or fewer components than shown, may combine two or more components, or may have a different configuration or arrangement of the components. The various components shown in Figure 3 may be implemented in hardware, software, firmware, including one or more signal processing and/or application specific integrated circuits, or a combination of thereof.

As shown in Figure 3, the model deployment system 300 stores the model deployment module 318 in the memory 304. In some embodiments, the deployment module 318 has access to one or more of the following data structures and models, or a subset or superset thereof: input data 320 (e.g., containing real-world data 114 in Figure 1), the reduced, adaptive bit-width model 322 (e.g., reduced, adaptive bit-width model 112 in Figure 1, and reduced, adaptive bit-width model 240 in Figure 2), and output data 324. More details on the structures, functions, and interactions of the sub-modules and data structures of the model deployment system 300 are provided with respect to Figures 1, 4, and 5, and accompanying descriptions.

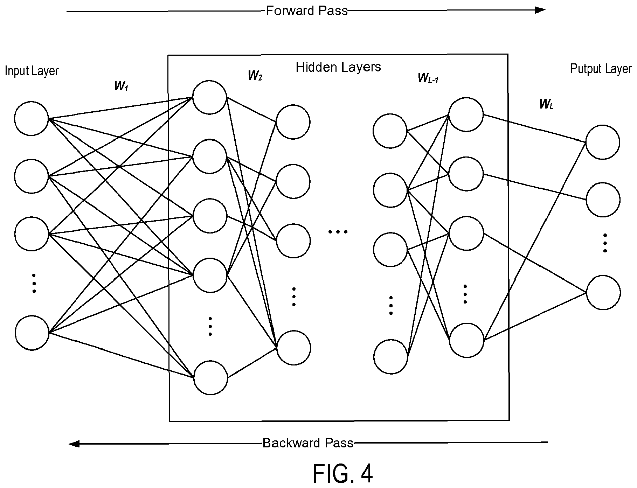

Figure 4 illustrate the structure and training process for a full-precision deep learning model (e.g., an artificial neural network with multiple hidden layers). The learning model includes a collection of units (or neurons) represented by circles, with connections (or synapses) between them. The connections have associated weights that each represent the influence that an output from a neuron in the previous layer (e.g., layer i) has on a neuron in the next layer (e.g., layer $i+1$). A neuron in each layer adds the outputs from all of the neurons that connect to it from the previous layer and apply an activation function to obtain a response value. The training process is a process for calibrating all of the weights $Wi$ for each layer of the learning model using a training data set which is provided in the input layer.

The training process typically includes two steps, forward propagation and backward propagation, that are repeated multiple times until a predefined convergence condition is met. In the forward propagation, the set of weights for different layers are applied to the input data and intermediate results from the previous layers. In the backward propagation, the margin of error of the output is measured, and the weights are adjusted accordingly to decrease the error. The activation function can be linear, rectified linear unit, sigmoid, hyperbolic tangent, or other types.

Conventionally, a network bias term b is added to the sum of the weighted outputs from the previous layer before the activation function is applied. The network bias provides the necessary perturbation that helps that network to avoid over fitting the training data. Below is a sample of workflow of a conventional neural network:

The training starts with the following components:
Input: image $I_{n \times m}$, Output: label $B_{k \times 1}$, and Model: L-layer neural network.
Each layer $i$ of the L-layer neural network is described as

$$y_{p \times q} = g\ (W_{p*q} \times x_{q \times 1} + b_{p \times 1}),$$

where $y$ is a layer response vector, $W$ is weight matrix, $x$ is an input vector, $g(x)=max(0,x)$ is an activation function and $b$ is a bias vector. (Note that $p$ and q are the dimensions of the layer and will be different in different layers).

```
//Training Phase
While res has not converged:
//Network Forward pass
x₁=I
For i = 1 to L:
        yᵢ=g(Wᵢ×xᵢ+bᵢ)
        xᵢ₊₁=yᵢ
res=½ ‖y_L−B‖₂          //a measure of margin of error//

//Backward pass
For i = L to 1:
```

$$W_i = W_i - \gamma \frac{\partial \text{res}}{\partial W_{i,j}} \quad // \gamma \text{ is a parameter}$$

$$b_i = b_i - \gamma \frac{\partial \text{res}}{\partial b_{i,j}}$$

The result of the training includes: Network weight parameters $W$ for each layer, the network bias parameter b for each layer.

//Testing Phase: To classify an unseen image $I_{un}$
$$x_1 = I_{un}$$
**For** i = 1 to L:
$$y_i = g(W_i \times x_i + b_i)$$
$$x_{i+1} = y_i$$

Return $y_L$

In the present disclosure, in accordance with some embodiments, an integer (INT) weight regularization term is added to the weights $W$ of each layer, where $W_i$ is the weights of layer $i$, and $\lfloor W_i \rfloor$ is the element-wise integer portions of the weights $W_i$. With this regularization, the training will take the decimals of the weights as penalty, and this can push all the full-precision (e.g., FP32) weights in the network toward their corresponding integer values after the training.

In addition, an 8-bit uniform quantization is performed on all the weights and intermediate results in the forward propagation through the network. A full-precision (e.g., FP32) compensation scalar is selected to adjust the value range of the weights, such that the value range of the weights are well represented by a predefined maximum bit-width (e.g., 8 bits). In general, 8-bit is a relatively generous bit-width to preserve the salient information of the weight distributions. This quantization will change the gradients in the backward pass to constrain the weight value ranges for the different layers. This quantization bit-width is used later as the maximum allowed reduced bit-width for the reduced adaptive bit-width model.

Below is a sample training process with the integer weight regularization and the 8-bit uniform quantization added.

In this training process, we also start with the following components:

Input: image $I_{n \times m}$, Output: label $B_{k \times 1}$, and Model: L-layer neural network.

(x) represents the uniform quantization, $(x) = \lfloor x/X_{max} \rfloor * 127 * (X_{max}/127.0)$, where $X_{max}$ is the current maximal boundary value of $x$ (the whole layer response), which will be updated in the training phase.

//Training Phase
**While** $res$ has not converged:
//Network Forwarding
$$x_1 = I$$
**For** i = 1 to L:
$$y_i = g(Qu(W_i) \times x_i + Qu(b_i) + RI_i)$$
$$x_{i+1} = y_i$$
$res = \frac{1}{2} \|y_L - B\|_2$      //a measure of margin of error//

//Backward pass
**For** i = L to 1:
$$W_i = W_i - \gamma \frac{\partial res}{\partial W_{i,j}} \quad // \gamma \text{ is a parameter}$$
$$b_i = b_i - \gamma \frac{\partial res}{\partial b_{i,j}}$$

The result of the training includes: Network weight parameters $W$ for each layer, the network bias parameter b for each layer, expressed in full-precision (e.g., single-precision floating point) format. These results differ from the results of the conventional training as described earlier. The full-precision parameters (e.g., weights $W$ and bias $b$) are pushed toward their nearest integers, with minimal compromise in model accuracy. In order to avoid large information loss, the value range of the integer values is constrained through the 8-bit forward quantization. Before the uniform quantization, the bias term in the convolution layer and fully-connected layer are harmful to the compactness of the network. It is proposed that bias item in the convolutional neural network will not decrease the entire network accuracy.

When applying the 8-bit uniform quantization to the weight parameters, the weight parameters are still expressed in full-precision format, but the total number of such response levels are bound by $2^8$-1, with half in the positive and half in the negative. In each iteration of the training phase, this quantization function is applied in each layer in the forward pass. The backward propagation still uses the full-precision numbers for learnable parameter updating. Therefore, with the compensation parameter $X_{max}$, the range of the weight integer values is effectively constrained.

After the convergence condition is met (e.g., when *res* has converged), a full-precision trained learning model (e.g., model 106') is obtained. This model has high accuracy, and high complexity, and has a large footprint (e.g., computation, power consumption, memory usage, etc.) when testing real-world data.

In some embodiments, network pruning is used to reduce the network complexity. Conventionally, a threshold weight is set. Only weights that are above the threshold are kept unchanged, and weights that below the threshold weight are set to zero, and the connections corresponding to the zero weight are removed from the network. Neurons that are not connected to any other neurons (e.g., due to removal of one or more connections) are effectively removed from the network, resulting in a more compact and sparse learning model. The conventional pruning technique is forced and results in significant information loss, and greatly compromises the model accuracy.

In the present disclosure, a validation dataset is used to perform reinforcement learning, which tests the accuracy of modified versions of the original full-precision trained model (e.g., model 106') with different combinations of a subset of the connections between the layers. The problem is treated as a weight selection game and reinforcement learning is applied to search for the optimal solution (e.g., optimal combination of connections) that balances both the desire for better model accuracy and model compactness. In some embodiments, the measure of pruning effectiveness Q is the sum of network accuracy (e.g., as measured by the Jensen-Shannon Divergence of the layer responses between the original model and the model with reduced connections) and reciprocal of total connection count. The result of the reinforcement learning is a subset of the more valuable weights in the network. In some embodiments, during each iteration of the reinforcement learning, one connection is removed from the network, or one previously removed connection is added back to the network. The network accuracy is evaluated after each iteration. After training is performed for a while, a slender network with sparse weights (and neurons) will emerge.

The result of the network pruning process includes: Network weight parameters $W_r$ for each layer, the network bias parameter $b_r$ for each layer, expressed in full-precision floating point format.

In some embodiments, after the pruned slender full-precision model (e.g., model 106") goes through an adaptive quantization process to produce the reduced, adaptive bit-width slender INT model (e.g., model 112). The adaptive bit-width of the model refers to the characteristic that the respective bit-width for storing the set of parameters (e.g., weights and bias) for each layer of the model is specifically selected for that set of parameters (e.g., in accordance with the distribution and range of the parameters). Specifically, the validation data set is used as input in a forward pass through the pruned slender full-precision network (e.g., model 106"), and the statistical distribution of the response values in each layer is collected. Then different configurations of bit-width and layer combinations are prepared as candidates for evaluation. For each candidate model, the validation data set is used as input in a forward pass through the candidate model, and the statistical distribution of the response values in each layer is collected. Then, the candidate is evaluated based on the amount of information loss that has resulted from the quantization applied to the candidate model. In some embodiments, Jensen-Shannon divergence between the two statistical distributions for each layer (or for the model as a whole) is used to identify the optimal bit-widths with the least information loss for that layer. In some embodiments, the quantization candidates are generated by using different combinations of bit-widths for all the layers; instead, the weights from different layers are clustered based on their values, and the quantization candidates are generated by using different combinations of bit-widths for all the clusters.

In some embodiments, instead of using linear or uniform quantization on the model parameters for each layer of the model, non-linear quantization is applied to the full-precision parameters of the different layers. Conventional linear quantization does not take into account the distribution of the parameter values, and results in large information losses. With non-uniform quantization (e.g., logarithmic quantization) on the full-precision parameters, more quantization levels are given to sub-levels with larger values, and leads to a reduction in quantization errors. Logarithmic quantization can be expressed in the following formula:

$$y(x) = X_m \quad * \frac{\ln\left(1+\left\lfloor R * \frac{x}{X_m}\right\rfloor\right)}{\ln(1+R)},$$

which quantizes x in the interval [0, $X_m$] with $R$ levels. Note that the sign [. J means finding the largest integer which is no more than the number inside (e.g., a number with FP32 precision). For example, if we set $X_m$ =105.84 and R=15, we will *have y(x)* in {0, 26.4600, 41.9381, 52.9200, 61.4382, 68.3981, 74.2826, 79.3800, 83.8762, 87.8982, 91.5366, 94.8581, 97.9136, 100.7426, 103.3763, 105.8400}. Compared with uniform quantization, this non-uniform scheme will distribute more quantization levels for sub-intervals with larger value. In adaptive quantization, $X_m$ is learned under a predefined information loss criterion, not the actual largest value for the interval. Another step taken in practice is that the actual value range may be in [$X_{min}$, $X_{max}$], $X_{min}$ is subtracted from $X_{max}$ to normalize its range to be consistent with the above discussion.

As discussed above, in some embodiments, the predefined measure of information loss is the Jensen-Shannon Divergence that measures the difference between two statistical distributions. In this case, the statistical distributions are the collection of full layer responses for all layers (or in respective layers) in the full-precision trained model (e.g., model 106' or 106"), and the quantized candidate model with a particular combination of bit-widths for its layers. Jensen-Shannon Divergence is expressed in the following formula:

$$ JS(P\|Q) = \frac{1}{2}D(P\|M) + \frac{1}{2}D(Q\|M) $$

where $M = \frac{1}{2}(P + Q)$, note that P and Q are two independent data distributions (e.g., the distribution of layer responses for the same layer (or all layers) in the original model and the candidate model). $D(P\|Q)$ is the Kullback-Leibler divergence from Q to P, which can be calculated by:

$$ D(P\|Q) = \sum_i P(i)\ln\left(\frac{P(i)}{Q(i)}\right). $$

Note that the Kullback-Leibler divergence is not symmetrical. Smaller the *JS* value corresponds to smaller information loss. The candidate selection is based on constraining the information loss under a predefined threshold, or to find a combination of bit-widths that produces the minimum information loss.

In some embodiments, a calibration data set is used as input in a forward propagation pass through the different candidate models (e.g., with different bit-width combinations for the parameters (e.g., weights and bias) of the different layers, and for the intermediate results (e.g., layer responses)).

In the following sample process to select the optimal combinations of bit-widths for the different layers, S is a calibration data set, **Statistics**$_i$ is the statistical distribution of the $i$-th layer response. $Q_{non}(x, qb)$ is the non-uniform quantization function, R is the number of quantization levels, qb is the bit-width used for the quantization.

$$ Q_{non}(x) = X_{max} * \frac{\ln\left(1+\left|R*\frac{x}{X_{max}}\right|\right)}{\ln(1+R)}, \text{ where R} = 2^{qb} - 1 $$

In a sample adaptive bit-width non-uniform quantization process, the base model is either the full-precision trained model 106' or the pruned slender full precision model 106", with their respective sets of weights *Wi* (or *Wr$_i$*) and bias *b$_i$* (or *br$_i$*) for each layer $i$ of the full-precision model.

```
For Iz ∈ S: // S is the calibration data set
For i = 1 to L:
        yᵢ=g(Wᵢ×xᵢ+bᵢ)
xᵢ₊₁=yᵢ
Statistics_i=Statistics_i ∪ yᵢ


For i = 1 to L:
For qb1 = 1 to 8: // quantization bit-width candidates for weights
For qb2 = 1 to 8: // quantization bit-width for layer response
        Wq,ᵢ=QNon(Wᵢ, qb1), bq,ᵢ=QNon(bᵢ, qb1)
        Statq,ᵢ=QNon(Wq,ᵢ×xᵢ+bᵢ, qb2)
        Inf_tmp = InformationLoss(Statq,ᵢ, Statistics_i)
        If Inf_tmp < Inf_min:
                Wopt,ᵢ=Wq,ᵢ, bopt,ᵢ=bq,ᵢ
                qbopt,=qb2
                Inf_min = Inf_tmp
```

The result of the above process is the set of quantized weights $W_{opt,i}$ with the optimal quantization bit-width(s) for each layer $i$, and the set of quantized bias $b_{opt,\,i}$ with the optimal quantization bit-width(s) for each layer $i$. The adaptive bit-width model 112 is thus obtained. In addition, the optimal quantization bit-width for the layer response $qb2$ is also obtained.

In the model deployment phase, the reduced, adaptive bit-width model obtained according to the methods described above (e.g., model 112) is used on a model deployment system (e.g., a portable electronic device) to produce an output (e.g., result 118) corresponding to a real-world input (e.g., test data 114). In the testing phase, the model parameters are kept in the quantized format, and the intermediate results are quantized in accordance with the optimal quantization bit-width $qb2$ identified during the quantization process (and provided to the model deployment system with the reduced model). (Too Concrete), as shown in the example process below:

$$//\text{Testing Phase: To classify an unseen image } I_{un}$$

$$x_1=I_{un}$$

$$\textbf{For } i = 1 \text{ to L:}$$

$$y_i=(Q_{Non}(W_{opt,i}×x_i+b_{opt,i},\ qb2_{opt}))$$

$$x_{i+1}=y_i$$

$$\text{Return } y_L$$

The above model is much more compact than the original full precision trained model (e.g., model 116'), and the computation is performed using integers as opposed to floating point values, which further reduces the computation footprint and improves the speed of the calculations. Furthermore, certain hardware features can be exploited to further speedup the matrix manipulations/computations with the reduced bit-widths and use of integer representations. In some embodiments, the bit-width selection can be further constrained (e.g., even numbers for bit-width only) to be more compatible with the hardware (e.g., memory structure) used on the deployment system.

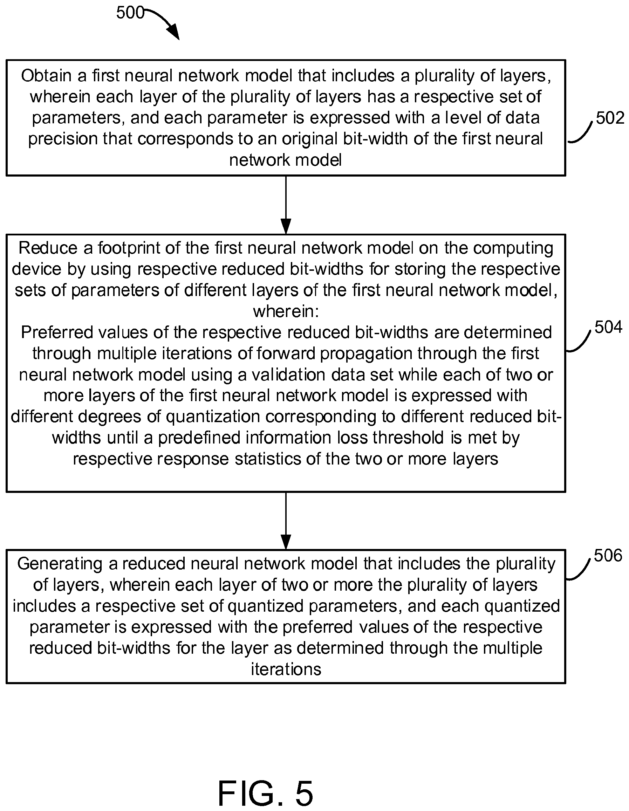

Figure 5 is a flow diagram of an example process 500 implemented by a model generation system (e.g., model generation system 102 or 200) in accordance with some embodiments. In some embodiments, example process 500 is implemented on a server component of the machine learning system 100.

The process 500 provides an adaptive bit-width neural network model on a computing device. At the computing device, wherein the computing device has one or more processors and memory: the device obtains (502) a first neural network model (e.g., a trained full-precision model 106', or a pruned full-precision model 106") that includes a plurality of layers, wherein each layer of the plurality of layers (e.g., one or more convolution layers, a pooling layer, an activation layer, etc.) has a respective set of parameters (e.g., a set of weights for coupling the layer and its next layer, a set of network bias parameters for the layer, etc.), and each parameter is expressed with a level of data precision (e.g., as a single-precision floating point value) that corresponds to an original bit-width (e.g., 32-bit or other hardware-specific bit-widths) of the first neural network model (e.g., each parameter occupies a first number of bits (e.g., occupying 32 bits, as a 32 bits Floating Point number) in the memory of the computing device).

The device reduces (504) a footprint (e.g., memory and computation cost) of the first neural network model on the computing device (e.g., both during storage, and, optionally, during deployment of the model) by using respective reduced bit-widths for storing the respective sets of parameters of different layers of the first neural network model, wherein: preferred values (e.g., optimal bit-width values that have been identified using the techniques described herein) of the respective reduced bit-widths are determined through multiple iterations of forward propagation through the first neural network model using a validation data set while each of two or more layers of the first neural network model is expressed with different degrees of quantization corresponding to different reduced bit-widths until a predefined information loss threshold (e.g., as measured by the Jensen-Shannon Divergence described herein) is met by respective response statistics of the two or more layers.

The device generates (506) a reduced neural network model (e.g., model 112) that includes the plurality of layers, wherein each layer of two or more the plurality of layers includes a respective set of quantized parameters (e.g., quantized weights and bias parameters), and each quantized parameter is expressed with the preferred values of the respective reduced bit-widths for the layer as determined through the multiple iterations. In some embodiments, the reduced neural network model is deployed on a portable electronic device, wherein the portable electronic device processes real-world data to generate predicative results in accordance with the reduced model, and wherein the intermediate results produced during the data processing is quantized in accordance with an optimal reduced bit-width provided to the portable electronic device by the computing device.

In some embodiments, a first layer (e.g., i=2) of the plurality of layers in the reduced neural network model (e.g., model 112) has a first reduced bit-width (e.g., 4-bit) that is smaller than the original bit-width (e.g., 32-bit) of the first neural network model, a second layer (e.g., i=3) of the plurality of layers in the reduced neural network model (e.g., model 112) has a second reduced bit-width (e.g., 6-bit) that is smaller than the original bit-width of the first neural network model, and the first reduced bit-width is distinct from the second reduced bit-width in the reduced neural network model.

To reduce the footprint of the first neural network includes: for a first layer of the two or more layers that has a first set of parameters (e.g., a set of weights and bias(es)) expressed with the level of data precision corresponding to the original bit-width of the first neural network model: the computing device collects a respective baseline statistical distribution of activation values for the first layer (e.g., $statistics\_i$) as the validation data set is forward propagated as input through the first neural network model, while the respective sets of parameters of the plurality of layers are expressed with the original bit-width (e.g., 32-bit) of the first neural network model; the computing device collects a respective modified statistical distribution of activation values for the first layer (e.g., $stat_{q,i}$) as the validation data set is forward propagated as input through the first neural network model, while the respective set of parameters of the first layer are expressed with a first reduced bit-width (e.g., $W_{q,i}$ and $b_{q,i}$) that are smaller than the original bit-width of the first neural network model; determining a predefined divergence (e.g., Inf_tmp = InformationLoss ($stat_{q,i}$, $statistics\ i$)) between the respective modified statistical distribution of activation values for the first layer and the respective baseline statistical distribution of activation values for the first layer; and the computing device identifies a minimum value of the first reduced bit-width for which a reduction in the predefined divergence due to a further reduction of bit-width for the first layer is below a predefined threshold.

In some embodiments, expressing the respective set of parameters of the first layer with the first reduced bit-width includes performing non-uniform quantization (e.g., logarithmic quantization $Q_{non}(...)$) on the respective set of parameters of the first layer to generate a first set of quantized parameters for the first layer, and a maximal boundary value (e.g., $X_{max}$) for the non-uniform quantization of the first layer is selected based on the baseline statistical distribution of activation values for the first layer during each forward propagation through the first layer.

In some embodiments, obtaining the first neural network model that includes the plurality of layers includes: during training of the first neural network: for a first layer of the two or more layers that has a first set of parameters expressed with the level of data precision corresponding to the original bit-width of the first neural network model: obtaining an integer regularization term (e.g., $RI_i$) corresponding to the first layer (e.g., layer i) in accordance with a difference between a first set of weights (e.g., $W_i$) that corresponds to the first layer and integer portions of the first set of weights (e.g., $\lfloor W_i \rfloor$) (e.g., $RI_i = \frac{1}{2} \| W_i - \lfloor W_i \rfloor \|_2$); and adding the integer regularization term (e.g., $RI_i$) to a bias term during forward propagation through the first layer (with the 8-bit uniform quantization applied to the weights and the bias term) such that gradients during backward propagation through the first layer are altered to push values of the first set of parameters toward integer values.

## Claims

1. A computer-implemented method for providing an adaptive bit-width neural network model on a computing device, the method comprising:

obtain (502) a first neural network model (106', 106") that includes a plurality of layers, wherein each layer of the plurality of layers has a respective set of parameters, and each parameter is expressed with a level of data precision that corresponds to an original bit-width of the first neural network model (106', 106");

reduce (504) a footprint of the first neural network model (106', 106") on the computing device by using respective reduced bit-widths for storing the respective sets of parameters of different layers of the first neural network model (106', 106"), wherein preferred values of the respective reduced bit-widths are determined through multiple iterations of forward propagation through the first neural network model (106', 106") using a validation data set (110, 234) while each of two or more layers of the first neural network model (106', 106") is expressed with different degrees of quantization corresponding to different reduced bit-widths until a predefined information loss threshold is met by respective response statistics of the two or more layers, and wherein reducing the footprint of the first neural network further includes, for a first layer of the two or more layers that has a first set of parameters expressed with the level of data precision corresponding to the original bit-width of the first neural network model (106', 106"):

collect a respective baseline statistical distribution of activation values for the first layer as the validation data set (110, 234) is forward propagated as input through the first neural network model (106', 106"), while the respective sets of parameters of the plurality of layers are expressed with the original bit-width of the first neural network model (106', 106"),

collect a respective modified statistical distribution of activation values for the first layer as the validation data set (110, 234) is forward propagated as input through the first neural network model (106', 106"), while the respective set of parameters of the first layer are expressed with a first reduced bit-width that are smaller than the original bit-width of the first neural network model (106', 106"),

determine a divergence according to a predefined information loss between the respective modified statistical distribution of activation values for the first layer and the respective baseline statistical distribution of activation values for the first layer,

identify a minimum value of the first reduced bit-width for which a reduction in the determined divergence due to a further reduction of bit-width for the first layer is below a predefined threshold; and

generate (506) a reduced neural network model (112) that includes the plurality of layers, wherein each layer of the plurality of layers includes a respective set of quantized parameters, and each quantized parameter is expressed with the preferred values of the respective reduced bit-widths for the layer as determined through the multiple iterations.

2. The computer-implemented method of claim 1, wherein:

the first layer of the plurality of layers in the reduced neural network model (112) has a first reduced bit-width that is smaller than the original bit-width of the first neural network model (106', 106"),

a second layer of the plurality of layers in the reduced neural network model (112) has a second reduced bit-width that is smaller than the original bit-width of the first neural network model (106', 106"), and

the first reduced bit-width is distinct from the second reduced bit-width in the reduced neural network model (112).

3. The computer-implemented method of claim 1, wherein:

expressing the respective set of parameters of the first layer with the first reduced bit-width includes performing non-uniform quantization on the respective set of parameters of the first layer to generate a first set of quantized parameters for the first layer, and

a maximal boundary value for the non-uniform quantization of the first layer is selected based on the baseline statistical distribution of activation values for the first layer during each forward propagation through the first layer.

4. The computer-implemented method of any one of claims 1-3, wherein obtaining the first neural network model (106', 106") that includes the plurality of layers includes:
during training of the first neural network:
for a first layer of the two or more layers that has a first set of parameters expressed with the level of data precision corresponding to the original bit-width of the first neural network model (106', 106"):

obtaining an integer regularization term corresponding to the first layer in accordance with a difference between a first set of weights that corresponds to the first layer and integer portions of the first set of weights; and adding the integer regularization term to a bias term during forward propagation through the first layer such that gradients during backward propagation through the first layer are altered to push values of the first set of parameters toward integer values.

5. The computer-implemented method of claim 4, wherein obtaining the first neural network model (106', 106") that includes the plurality of layers includes:
during training of the first neural network:
for the first layer of the two or more layers that has a first set of parameters expressed with the level of data precision corresponding to the original bit-width of the first neural network model (106', 106"), performing uniform quantization on the first set of parameters with a predefined reduced bit-width that is smaller than the original bit-width of the first neural network model (106', 106") during the forward propagation through the first layer.

6. The computer-implemented method of claim 5, wherein obtaining the first neural network model (106', 106") that includes the plurality of layers includes:
during training of the first neural network:
for the first layer of the two or more layers that has a first set of parameters expressed with the level of data precision corresponding to the original bit-width of the first neural network model (106', 106"), not performing the uniform quantization on the first set of parameters with the predefined reduced bit-width during the backward propagation through the first layer.

7. A device, comprising:

one or more processors (202, 302); and
memory (204, 304), the memory (204, 304) including instructions, which, when executed by the one or more processors (202, 302), cause the processors (202, 302) to perform the computer-implemented method of any one of claims 1-6.

8. A computer-readable storage medium, storing instructions, which, when executed by one or more processors (202, 302), cause the processors (202, 302) to perform the computer-implemented method of any one of claims 1-6.

**Patentansprüche**

1. Computerimplementiertes Verfahren zum Bereitstellen eines neuronalen Netzwerkmodells mit adaptiver Bitweite auf einer Rechnervorrichtung, wobei das Verfahren Folgendes umfasst:

Erhalten (502) eines ersten neuronalen Netzwerkmodells (106', 106"), das eine Mehrzahl von Schichten einschließt, wobei jede Schicht der Mehrzahl von Schichten einen jeweiligen Satz von Parametern aufweist und jeder Parameter mit einem Niveau von Datengenauigkeit ausgedrückt wird, das einer originalen Bitweite des ersten neuronalen Netzwerkmodells (106', 106") entspricht;
Reduzieren (504) eines Ressourcenbedarfs des ersten neuronalen Netzwerkmodells (106', 106") auf der Rechnervorrichtung durch Benutzen jeweiliger reduzierter Bitweiten zum Speichern der jeweiligen Sätze von Parametern von verschiedenen Schichten des ersten neuronalen Netzwerkmodells (106', 106"), wobei bevorzugte Werte der jeweiligen reduzierten Bitweiten durch mehrfache Iterationen von Vorwärtspropagation durch das erste neuronale Netzwerkmodell (106', 106") unter Verwendung eines Validierungsdatensatzes (110, 234) bestimmt werden, während jede von zwei oder mehr Schichten des ersten neuronalen Netzwerkmodells (106', 106") mit verschiedenen Graden an Quantisierung entsprechend verschiedenen reduzierten Bitweiten ausgedrückt wird, bis eine vordefinierte Schwelle für Informationsverlust von den jeweiligen Antwortstatistiken der zwei oder mehr Schichten erreicht wird, und wobei Reduzieren des Ressourcenbedarfs des ersten neuronalen Netzwerks ferner für eine erste Schicht der zwei oder mehr Schichten, die einen ersten Satz von Parameters aufweist, die mit dem Niveau von Datengenauigkeit entsprechend der originalen Bitweite des ersten neuronalen Netzwerkmodells (106', 106") ausgedrückt sind, Folgendes einschließt:

Sammeln einer jeweiligen grundlegenden statistischen Verteilung von Aktivierungswerten für die erste Schicht, wenn der Validierungsdatensatz (110, 234) als Eingabe durch das erste neuronale Netzwerkmodell (106', 106") vorwärtspropagiert wird, während die jeweiligen Sätze von Parametern der Mehrzahl von Schichten mit der originalen Bitweite des ersten neuronalen Netzwerkmodells (106', 106") ausgedrückt werden,

Sammeln einer jeweiligen modifizierten statistischen Verteilung von Aktivierungswerten für die erste Schicht, wenn der Validierungsdatensatz (110, 234) als Eingabe durch das erste neuronale Netzwerkmodell (106', 106") vorwärtspropagiert wird, während der jeweilige Satz von Parametern der ersten Schicht mit einer ersten reduzierten Bitweite, die kleiner als die originale Bitweite des ersten neuronalen Netzwerkmodells (106', 106") ist, ausgedrückt wird,

Bestimmen einer Divergenz gemäß einem vordefinierten Informationsverlust zwischen der jeweiligen modifizierten statistischen Verteilung von Aktivierungswerten für die erste Schicht und der jeweiligen grundlegenden statistischen Verteilung von Aktivierungswerten für die erste Schicht,

Identifizieren eines Minimalwertes der ersten reduzierten Bitweite, für die eine Reduktion in der bestimmten Divergenz aufgrund einer weiteren Reduktion der Bitweite für die erste Schicht unterhalb einer vordefinierten Schwelle liegt; und

Erzeugen (506) eines reduzierten neuronalen Netzwerkmodells (112), das die Mehrzahl von Schichten einschließt, wobei jede Schicht der Mehrzahl von Schichten einen jeweiligen Satz von quantisierten Parametern einschließt und jeder quantisierte Parameter mit den bevorzugten Werten der jeweiligen reduzierten Bitweiten für die Schicht ausgedrückt wird, wie sie durch die mehreren Iterationen bestimmt worden sind.

2. Computerimplementiertes Verfahren nach Anspruch 1, wobei:

die erste Schicht der Mehrzahl von Schichten im reduzierten neuronalen Netzwerkmodell (112) eine erste reduzierte Bitweite aufweist, die kleiner als die originale Bitweite des ersten neuronalen Netzwerkmodells (106', 106") ist,

eine zweite Schicht der Mehrzahl von Schichten im reduzierten neuronalen Netzwerkmodell (112) eine zweite reduzierte Bitweite aufweist, die kleiner als die originale Bitweite des ersten neuronalen Netzwerkmodells (106', 106") ist, und

die erste reduzierte Bitweite von der zweiten reduzierten Bitweite im reduzierten neuronalen Netzwerkmodell (112) verschieden ist.

3. Computerimplementiertes Verfahren nach Anspruch 1, wobei:

Ausdrücken des jeweiligen Satzes von Parametern der ersten Schicht mit der ersten reduzierten Bitweite Durchführen einer nicht-uniformen Quantisierung auf dem jeweiligen Satz von Parametern der ersten Schicht einschließt, um einen ersten Satz von quantisierten Parametern für die erste Schicht zu erzeugen, und

ein maximaler Grenzwert für die nicht-uniforme Quantisierung der ersten Schicht auf der Basis der grundlegenden statistischen Verteilung von Aktivierungswerten der ersten Schicht während jeder Vorwärtspropagation durch die erste Schicht gewählt wird.

4. Computerimplementiertes Verfahren nach einem der Ansprüche 1-3, wobei Erhalten des ersten neuronalen Netzwerkmodells (106', 106"), das die Mehrzahl von Schichten einschließt, Folgendes einschließt:

während des Trainings des ersten neuronalen Netzwerks:

für eine erste Schicht der zwei oder mehr Schichten, die einen ersten Satz von Parametern aufweist, die mit dem Niveau von Datengenauigkeit entsprechend der originalen Bitweite des ersten neuronalen Netzwerkmodells (106', 106") ausgedrückt sind:

Erhalten eines ganzzahligen Regularisierungsterms entsprechend der ersten Schicht gemäß einer Differenz zwischen einem ersten Satz von Gewichten, der der ersten Schicht entspricht, und ganzzahligen Anteilen des ersten Satzes von Gewichten; und

Hinzufügen des ganzzahligen Regularisierungsterms zu einem Verschiebungsterm während einer Vorwärtspropagation durch die erste Schicht derart, dass Gradienten während der Rückwärtspropagation durch die erste Schicht verändert werden, sodass Werte des ersten Satzes von Parametern zu ganzzahligen Werten gedrückt werden.

5. Computerimplementiertes Verfahren nach Anspruch 4, wobei Erhalten des ersten neuronalen Netzwerkmodells (106', 106"), das die Mehrzahl von Schichten einschließt, Folgendes einschließt:

während des Trainings des ersten neuronalen Netzwerks:
für die erste Schicht der zwei oder mehr Schichten, die einen ersten Satz von Parametern aufweist, die mit dem Niveau von Datengenauigkeit entsprechend der originalen Bitweite des ersten neuronalen Netzwerkmodells (106', 106") ausgedrückt sind, Durchführen einer uniformen Quantisierung auf dem ersten Satz von Parametern mit einer vordefinierten reduzierten Bitweite, die kleiner als die originale Bitweite des ersten neuronalen Netzwerkmodells (106', 106") ist, während der Vorwärtspropagation durch die erste Schicht.

6. Computerimplementiertes Verfahren nach Anspruch 5, wobei Erhalten des ersten neuronalen Netzwerkmodells (106', 106"), das die Mehrzahl von Schichten einschließt, Folgendes einschließt:
während des Trainings des ersten neuronalen Netzwerks:
für die erste Schicht der zwei oder mehr Schichten, die einen ersten Satz von Parametern aufweist, die mit dem Niveau von Datengenauigkeit entsprechend der originalen Bitweite des ersten neuronalen Netzwerkmodells (106', 106") ausgedrückt sind, Nicht-Durchführen der uniformen Quantisierung auf dem ersten Satz von Parametern mit der vordefinierten reduzierten Bitweite während der Rückwärtspropagation durch die erste Schicht.

7. Vorrichtung, umfassend:

einen oder mehrere Prozessoren (202, 302); und
Arbeitsspeicher (204, 304), wobei der Arbeitsspeicher (204, 304) Instruktionen einschließt, die bei Ausführung durch den einen oder die mehreren Prozessoren (202, 302) die Prozessoren (202, 302) veranlassen, das computerimplementierte Verfahren nach einem der Ansprüche 1-6 durchzuführen.

8. Computerlesbares Speichermedium, das Instruktionen speichert, die bei Ausführung durch einen oder mehrere Prozessoren (202, 302) die Prozessoren (202, 302) veranlassen, das computerimplementierte Verfahren nach einem der Ansprüche 1-6 durchzuführen.

**Revendications**

1. Un procédé mis en œuvre par ordinateur destiné à la fourniture d'un modèle de réseau neuronal à largeur de bit adaptative sur un dispositif informatique, le procédé comprenant :

l'obtention (502) d'un premier modèle de réseau neuronal (106', 106") qui comprend une pluralité de couches, où chaque couche de la pluralité de couches possède un ensemble respectif de paramètres, et chaque paramètre est exprimé avec un niveau de précision de données qui correspond à une largeur de bit d'origine du premier modèle de réseau neuronal (106', 106"),
la réduction (504) d'une empreinte du premier modèle de réseau neuronal (106', 106") sur le dispositif informatique par l'utilisation de largeurs de bit réduites respectives destinées à la conservation en mémoire des ensembles respectifs de paramètres de différentes couches du premier modèle de réseau neuronal (106', 106"), où des valeurs préférées des largeurs de bit réduites respectives sont déterminées par l'intermédiaire d'une pluralité d'itérations de propagation vers l'avant au travers du premier modèle de réseau neuronal (106', 106") au moyen d'un ensemble de données de validation (110, 234), tandis que chaque couche de deux ou plus couches du premier modèle de réseau neuronal (106', 106") est exprimé avec différents degrés de quantification correspondant à différentes largeurs de bit réduites jusqu'à ce qu'un seuil de perte d'informations prédéfinie soit atteint par des statistiques de réponse respectives des deux ou plus couches, et où la réduction de l'empreinte du premier réseau neuronal comprend en outre, pour une première couche des deux ou plus couches qui possède un premier ensemble de paramètres exprimés avec le niveau de précision de données correspondant à la largeur de bit d'origine du premier modèle de réseau neuronal (106', 106") :

le recueil d'une distribution statistique de base respective de valeurs d'activation pour la première couche à mesure que l'ensemble de données de validation (110, 234) est propagé vers l'avant tel qu'entré au travers du premier modèle de réseau neuronal (106', 106"), tandis que les ensembles respectifs de paramètres de la pluralité de couches sont exprimés avec la largeur de bit d'origine du premier modèle de réseau neuronal (106', 106"),
le recueil d'une distribution statistique modifiée respective de valeurs d'activation pour la première couche à mesure que l'ensemble de données de validation (110, 234) est propagé vers l'avant tel qu'entré au travers du premier modèle de réseau neuronal (106', 106"), tandis que l'ensemble respectif de paramètres de la première couche est exprimé avec une première largeur de bit réduite qui est plus petite que la largeur de bit d'origine du premier modèle de réseau neuronal (106', 106"),

la détermination d'une divergence en fonction d'une perte d'informations prédéfinie entre la distribution statistique modifiée respective de valeurs d'activation pour la première couche et la distribution statistique de base respective de valeurs d'activation pour la première couche,

l'identification d'une valeur minimale de la première largeur de bit réduite pour laquelle une réduction dans la divergence déterminée due à une réduction complémentaire de la largeur de bit pour la première couche est sous un seuil prédéfini, et

la génération (506) d'un modèle de réseau neuronal réduit (112) qui comprend la pluralité de couches, où chaque couche de la pluralité de couches comprend un ensemble respectif de paramètres quantifiés, et chaque paramètre quantifié est exprimé avec les valeurs préférées des largeurs de bit réduites respectives pour la couche telles que déterminées par l'intermédiaire de la pluralité d'itérations.

2. Le procédé mis en œuvre par ordinateur selon la Revendication 1, où :

la première couche de la pluralité de couches dans le modèle de réseau neuronal réduit (112) possède une première largeur de bit réduite qui est plus petite que la largeur de bit d'origine du premier modèle de réseau neuronal (106', 106"),

une deuxième couche de la pluralité de couches dans le modèle de réseau neuronal réduit (112) possède une deuxième largeur de bit réduite qui est plus petite que la largeur de bit d'origine du premier modèle de réseau neuronal (106', 106"), et

la première largeur de bit réduite est distincte de la deuxième largeur de bit réduite dans le modèle de réseau neuronal réduit (112).

3. Le procédé mis en œuvre par ordinateur selon la Revendication 1, où :

l'expression de l'ensemble respectif de paramètres de la première couche avec la première largeur de bit réduite comprend l'exécution d'une quantification non uniforme sur l'ensemble respectif de paramètres de la première couche de façon à générer un premier ensemble de paramètres quantifiés pour la première couche, et

une valeur de limite maximale pour la quantification non uniforme de la première couche est sélectionnée en fonction de la distribution statistique de base de valeurs d'activation pour la première couche au cours de chaque propagation vers l'avant au travers de la première couche.

4. Le procédé mis en œuvre par ordinateur selon l'une quelconque des Revendications 1 à 3, où l'obtention du premier modèle de réseau neuronal (106', 106") qui comprend la pluralité de couches comprend :

au cours de l'entraînement du premier réseau neuronal :

pour une première couche des deux ou plus couches qui possède un premier ensemble de paramètres exprimés avec le niveau de précision de données correspondant à la largeur de bit d'origine du premier modèle de réseau neuronal (106', 106") :

l'obtention d'un terme de régularisation de nombre entier correspondant à la première couche conformément à une différence entre un premier ensemble de poids qui correspond à la première couche et des parties de nombre entier du premier ensemble de poids, et

l'ajout du terme de régularisation de nombre entier à un terme de biais au cours de la propagation vers l'avant au travers de la première couche de sorte que des gradients au cours d'une propagation vers l'arrière au travers de la première couche soient modifiés de façon à pousser des valeurs du premier ensemble de paramètres vers des valeurs entières.

5. Le procédé mis en œuvre par ordinateur selon la Revendication 4, où l'obtention du premier modèle de réseau neuronal (106', 106") qui comprend la pluralité de couches comprend :

au cours de l'entraînement du premier réseau neuronal :

pour la première couche des deux ou plus couches qui possède un premier ensemble de paramètres exprimés avec le niveau de précision de données correspondant à la largeur de bit d'origine du premier modèle de réseau neuronal (106', 106"), l'exécution d'une quantification uniforme sur le premier ensemble de paramètres avec une largeur de bit réduite prédéfinie qui est plus petite que la largeur de bit d'origine du premier modèle de réseau neuronal (106', 106") au cours de la propagation vers l'avant au travers de la première couche.

6. Le procédé mis en œuvre par ordinateur selon la Revendication 5, où l'obtention du premier modèle de réseau neuronal (106', 106") qui comprend la pluralité de couches comprend :

au cours de l'entraînement du premier réseau neuronal :

pour la première couche des deux ou plus couches qui possède un premier ensemble de paramètres exprimés avec le niveau de précision de données correspondant à la largeur de bit d'origine du premier modèle de réseau neuronal (106', 106"), la non-exécution de la quantification uniforme sur le premier ensemble de paramètres avec la largeur de bit réduite prédéfinie au cours de la propagation vers l'arrière au travers de la première couche.

7. Un dispositif, comprenant :

un ou plusieurs processeurs (202, 302), et

une mémoire (204, 304), la mémoire (204, 304) contenant des instructions qui, lorsqu'elles sont exécutées par les un ou plusieurs processeurs (202, 302), amènent les processeurs (202, 302) à exécuter le procédé mis en œuvre par ordinateur selon l'une quelconque des Revendications 1 à 6.

8. Un support à mémoire lisible par ordinateur conservant en mémoire des instructions qui, lorsqu'elles sont exécutées par un ou plusieurs processeurs (202, 302), amènent les processeurs (202, 302) à exécuter le procédé mis en œuvre par ordinateur selon l'une quelconque des Revendications 1 6.

FIG. 1

EP 3 619 652 B1

200

## Model Generation System

```
Processor(s)
202
```

110

Network Communications
Interface 208

I/O Interface 206

MEMORY 204

Operating System 212

I/O Module 214

Communication Module 216

Model Generation Module 218

Training Module 220

Integer Regularization Module 222

8-bit Quantization Module 224

Network Pruning Module 226

Adaptive Quantization Module 228

Deployment Module 230

Training Corpus 232

Validation Dataset 234

Full-precision Model 236

Slender full-precision Model 238

Adaptive Bit-width Model 240

# FIG. 2

300

Model Deployment System

Processor(s)
302

Network Communications
Interface 308

110

I/O Interface 306

MEMORY 304

Operating System 312

I/O Module 314

Communication Module 316

Model Deployment Module 318

Input Data 320

Adaptive Bit-Width Model 322

Output Data 324

FIG. 3

FIG. 4

500

Obtain a first neural network model that includes a plurality of layers, wherein each layer of the plurality of layers has a respective set of parameters, and each parameter is expressed with a level of data precision that corresponds to an original bit-width of the first neural network model — 502

Reduce a footprint of the first neural network model on the computing device by using respective reduced bit-widths for storing the respective sets of parameters of different layers of the first neural network model, wherein:
Preferred values of the respective reduced bit-widths are determined through multiple iterations of forward propagation through the first neural network model using a validation data set while each of two or more layers of the first neural network model is expressed with different degrees of quantization corresponding to different reduced bit-widths until a predefined information loss threshold is met by respective response statistics of the two or more layers — 504

Generating a reduced neural network model that includes the plurality of layers, wherein each layer of two or more the plurality of layers includes a respective set of quantized parameters, and each quantized parameter is expressed with the preferred values of the respective reduced bit-widths for the layer as determined through the multiple iterations — 506

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016086078 A1

- US 2016328647 A1

**Non-patent literature cited in the description**

- **CHEN X.** FxpNet: Training a deep convolutional neural network in fixed-point representation. *International Joint Conference on Neural,* 2017

- **PARK.** Weighted-Entropy-based Quantization for Deep Neural Networks. *2017 Conference on Computer Vision and Pattern Recognition*